**Europäisches Patentamt**

**European Patent Office**

**Office européen des brevets**

(11) Veröffentlichungsnummer : **0 529 105 B1**

(12) # EUROPÄISCHE PATENTSCHRIFT

(45) Veröffentlichungstag der Patentschrift :
**27.04.94 Patentblatt 94/17**

(51) Int. Cl.$^5$ : **B23D 19/06, E04C 5/03**

(21) Anmeldenummer : **91111803.2**

(22) Anmeldetag : **16.07.91**

(54) **Verfahren zur Herstellung eines Bewehrungselements für Beton.**

(43) Veröffentlichungstag der Anmeldung :
**03.03.93 Patentblatt 93/09**

(45) Bekanntmachung des Hinweises auf die
Patenterteilung :
**27.04.94 Patentblatt 94/17**

(84) Benannte Vertragsstaaten :
**AT BE CH DE DK ES FR GB GR IT LI LU NL SE**

(56) Entgegenhaltungen :
**EP-A- 0 169 962**
**EP-A- 0 392 039**
**DE-A- 3 013 669**
**DE-A- 3 726 538**
**FR-A- 2 031 892**

(73) Patentinhaber : **UAB**
**Unternehmens-Anlage-Beratungsgesellschaft**
**mbH**
**Prinz-Georg-Strasse 34**
**D-40477 Düsseldorf (DE)**

(72) Erfinder : **Goldau, Eckhard, Dipl.-Ing.**
**Im Brinkmannsfeld 46**
**W-4250 Bottrop (DE)**
Erfinder : **Wolf, Ulrich, Dipl.-Ing.**
**Am Heisterdahl 6c**
**W-4052 Korschenbroich (DE)**
Erfinder : **Longerich, Hans-Georg, Dipl.-Ing.**
**Weimarer Strasse 40**
**W-4054 Nettetal-1 (DE)**

(74) Vertreter : **Dörner, Lothar, Dipl.-Ing.**
**Stresemannstrasse 15**
**D-58095 Hagen (DE)**

**Beschreibung**

Die Erfindung bezieht sich auf ein Verfahren zur Herstellung eines mit sickenartigen Vertiefungen an mindestens einem seiner Längsränder versehenen Blechstreifens, der als Bewehrungselement für Beton verwendet wird, aus einem Blech.

Für Beton, worunter im folgenden auch Estrich und Mörtel verstanden werden, werden u.a. Stahlfasern als Bewehrungselemente verwendet. Ein mit Stahlfasern bewehrter Beton ist in seinen Eigenschaften, zum Beispiel Verschleiß, Abrieb, Zugfestigkeit, Bruchfestigkeit, Scherfestigkeit, Streckvermögen, Zähigkeit, dynamische Festigkeit, Ermüdungsfestigkeit, verbessert. Man verwendet ihn deshalb in großem Umfang. Die Stahlfaser soll dabei folgende Eigenschaften aufweisen: Sie soll hart und fest sein. Beim Vermischen mit Beton oder Zuschlagstoffen soll sie nicht brechen. Sie soll nicht zu kurz oder zu dick sein, da sie sonst unzureichend in ihrem Verstärkungsvermögen ist. Sie soll nicht zu lang oder zu dünn sein, da sie sonst zur Bildung von kugeligen Zementklumpen neigt. Allgemein werden ein Stahlfaser-Querschnitt von 0,1 bis 1,0 mm², eine Stahlfaser-Länge von 20 bis 50 mm und ein Gewichtsanteil der Stahlfaser von 15 bis 150 kg/m³ Beton empfohlen. Neben ihren Eigenschaften ist die kostengünstige Herstellung der Stahlfasern oberste Bedingung.

Stand der Technik:

Aus EP 0392039 A1 ist eine Stahlfaser in der Form eines Blechstreifens als Bewehrungselement bekannt. Der Blechstreifen ist an mindestens einem seiner Längsränder, vorzugsweise an beiden Längsrändern, mit sickenartigen Vertiefungen versehen. Ein solcher Blechstreifen weist durch die Sicken/Profile am Rand eine hohe Eigenstabilität auf. Die Randausbildung führt auch zu einer besseren Verzahnung mit dem Beton. Durch das Fehlen von Wellen kann es auch nicht Streckungen der Blechstreifen bei Belastung geben.

Bei dem ebenfalls aus EP 0392039 A1 bekannten Verfahren werden die vorgenannten Blechstreifen aus einem Blech gestanzt. Das Blech hat eine Breite B und eine Länge L. Bei einer Faserlänge l und einer Faserbreite b des Blechstreifens werden bei dem bekannten Verfahren über die Blechbreite $B > m \cdot l$ und über eine Teillänge $L1 = n \cdot b < L$ oder $B > n \cdot b$ und $L1 = m \cdot l < L$ bei jedem von (a - 1) Verfahrensschritten $\dfrac{m \cdot n}{(a - 1)}$ Blechstreifen aus dem Blech gestanzt, wobei a, m und n ganze Zahlen sind und $a \geqq 2$ ist. Das bekannte Verfahren ist insoweit verbesserungsfähig, als die Zahl der in der Zeiteinheit hergestellten Blechstreifen zu gering ist.

Darstellung der Erfindung:

Hier will die Erfindung Abhilfe schaffen. Der Erfindung liegt die Aufgabe zugrunde, ein Verfahren zur Herstellung der vorgenannten Blechstreifen aus einem Blech als Ausgangsmaterial zu schaffen, bei dem die Zahl der in der Zeiteinheit hergestellten Blechstreifen vervielfacht ist. Die Aufgabe wird gelöst durch die in den Patentansprüchen beschriebenen Maßnahmen.

Bei der Erfindung wird ein endloses Blech der Breite B einer Bandspaltanlage zugeführt. Auf deren Mehrfachstreifenschere entstehen n ·b Blechbänder, wobei b wiederum die Faserbreite des fertigen Blechstreifens bezeichnet. Die Blechbänder weisen bereits die sickenartigen Vertiefungen des fertigen Blechstreifens auf. Auf der nachgeordneten Messerschere werden mit jedem Scherenhub m · n fertige Blechstreifen der Faserlänge l geschnitten. Die Herstellung erfolgt nicht taktweise, sondern kontinuierlich. Durch Verwendung eines breiteren Blechs, aus dem eine größere Zahl Blechbänder hergestellt werden kann, und/oder durch erhöhte Durchlaufgeschwindigkeit für das Blech/die Blechbänder kann die Zahl der Blechstreifen noch erhöht werden. Die Grenze wird erreicht durch die Hubfrequenz der Messerschere. Die Erhöhungen sind möglich, weil bei dem Verfahren nach der Erfindung deutlich geringere Kräfte auftreten als bei dem bekannten Stanzverfahren. Versuche haben ergeben, daß mit dem Verfahren und der Vorrichtung nach der Erfindung mindestens die dreifache Menge Blechstreifen im Vergleich zu dem bekannten Verfahren hergestellt werden können.

Kurze Beschreibung der Zeichnung:

Ein Ausführungsbeispiel der Erfindung ist in der Zeichnung dargestellt und wird nachfolgend im einzelnen beschrieben. Es zeigen:

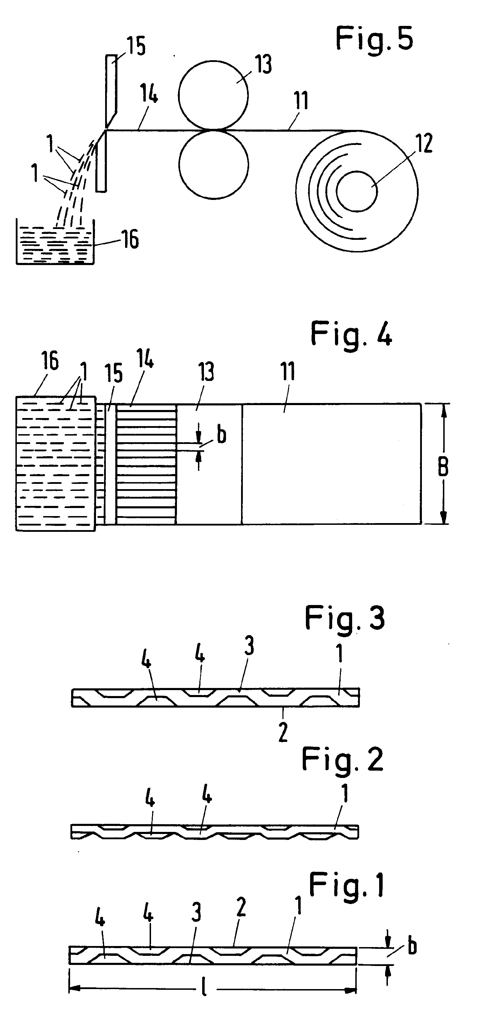

Figur 1        in vergrößerter Darstellung die Ansicht eines Blechstreifens;
Figur 2        eine Seitenansicht des Blechstreifens;
Figur 3        die Unteransicht des Blechstreifens;
Figur 4        die schematische Darstellung einer Bandspaltanlage in Draufsicht;

EP 0 529 105 B1

Figur 5      die zu Fig. 4 gehörende Vorderansicht;

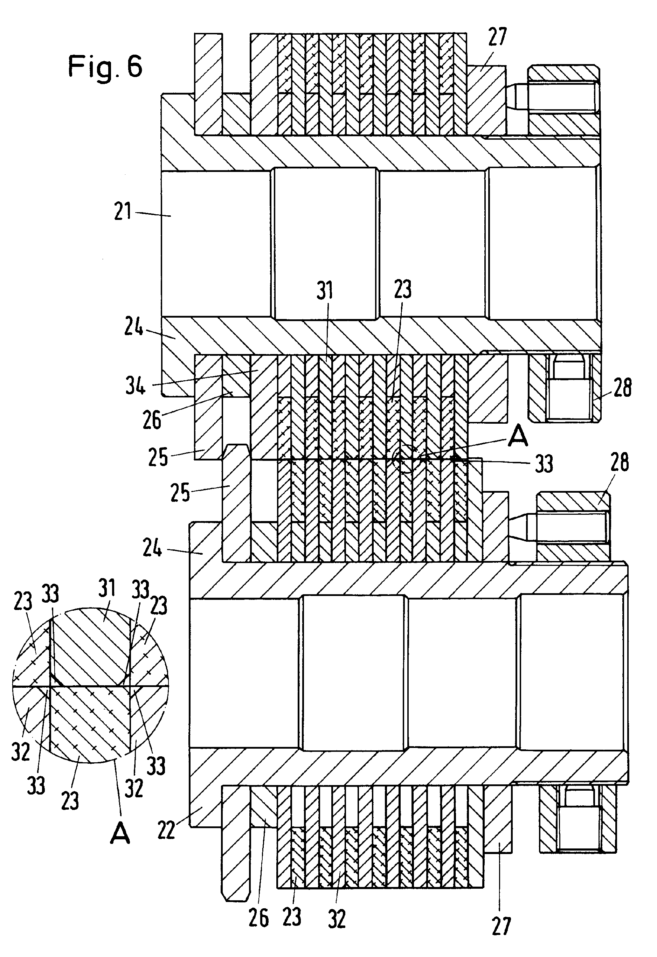

Figur 6      einen Axialschnitt durch den Messersatz einer Mehrfachstreifenschere für die Bandspaltanlage.

Bester Weg zur Ausführung der Erfindung:

Die als Ausführungsbeispiel gewählte Stahlfaser besteht aus einem Blechstreifen 1. Er weist eine wählbare Faserlänge l und eine wählbare Faserbreite b auf. Im Ausführungsbeispiel beträgt die Faserlänge ca. 35 mm, die Faserbreite ca. 2 mm. Seine Dicke beträgt ca. 0,4 mm. In Grenzen sind diese Abmessungen veränderbar.

Der Blechstreifen 1 ist an seinen Längsrändern 2, 3 mit sickenartigen Vertiefungen 4 versehen. Die sickenartigen Vertiefungen 4 sind an dem einen Längsrand 2 gegenüber denen an dem anderen Längsrand 3 in Längsrichtung versetzt angeordnet: Symmetrisch ist zwischen jeweils zwei sickenartigen Vertiefungen 4 an dem einen Längsrand 2 eine sickenartige Vertiefung an dem anderen Längsrand 3 vorgesehen.

Durch die sickenartigen Vertiefungen 4 entstehen in der Ansicht und in der Unteransicht mäanderförmige Linien. Durch Änderung von Anordnung und Ausbildung der sickenartigen Vertiefungen 4 ist eine andere Ausgestaltung möglich.

Die Blechstreifen 1 werden in einer Blechspaltanlage aus einem endlosen Blech 11 hergestellt. Das Blech 11 liegt im Ausführungsbeispiel als Coil vor und ist auf einen Ablaufhaspel 12 aufgebracht. Von dem Ablaufhaspel 12 wird das Blech 11 einer Mehrstreifenschere 13 zugeführt. Die Mehrstreifenschere 13 spaltet das Blech 11 der Breite B in n endlose Blechbänder 14. Jedes Blechband 14 hat die Faserbreite b des fertigen Blechstreifens 1 und auch seine Randausbildung mit den sickenartigen Vertiefungen 4. Die Blechbänder 14 werden dann einer der Mehrstreifenschere 13 nachgeordneten Messerschere 15 mit quer zu den Blechbändern 14 stehenden Messern zugeführt. In der Messerschere 15 werden die Blechbänder 14 zerschnitten in die fertigen Blechstreifen 1 mit der Faserlänge l. Die Blechstreifen 1 werden in Transportbehältern 16 gesammelt.

Die Mehrfachstreifenschere 13 ist mit einem Messersatz bestückt, der aus Rollenscherenmessern 31, 32 besteht, die auf einer Oberwalze 21 und einer Unterwalze 22 angebracht sind. Jedes Rollenscherenmesser 31, 32 ist auf seinem Umfang, und zwar an den Rändern, mit Einkerbungen 33 versehen, die die sickenartigen Vertiefungen 4 in dem Blechstreifen 1 bewirken. Die Rollenscherenmesser 31 der Oberwalze 21 stehen kammartig zu den Rollenscherenmessern 32 der Unterwalze 22. Die Rollenscherenmesser 31, 32 einer Walze 21, 22 sind von den benachbarten Rollenscherenmessern 31, 32 derselben Walze 21,22 durch Distanzringe getrennt, auf die im Ausführungsbeispiel gummierte Auswerferringe 23 aufgezogen sind. Die Auswerferringe 23 verhindern, daß die Blechbänder 14 sich um die Walzen 21, 22 wickeln. Je ein Auswerferring 23 der einen Walze 21, 22 ist einem Rollenscherenmesser 32, 31 der anderen Walze 22, 21 gegenüber angeordnet. Die Auswerferringe 23 können auch im Abstand von den Walzen 21,22 die Blechbänder 14 führen.

Die Rollenscherenmesser 31, 32 derselben Walze 21, 22 sind auf einer Messerhülse 24 gehalten, die an einer Stirnseite zu einem Außenflansch abgewinkelt ist. An dem Außenflansch liegen innen Führungen 25 an, an die unter Zwischenfügung je eines Distanzrings 26, an der Oberwalze 21 zusätzlich eines Führungsmessers 34, in Axialrichtung abwechselnd die Rollenscherenmesser 31, 32 sowie die Auswerferringe 23 anschließen. An der entgegengesetzen Stirnseite sind die Rollenscherenmesser 31, 32 und die Auswerferringe 23 unter Zwischenfügung eines Endrings 27 mittels einer auf die Messerhülse 24 geschraubten Spannmutter 28 gehalten.

**Patentansprüche**

1.      Verfahren zur Herstellung eines mit sickenartigen Vertiefungen (4) an mindestens einem seiner Längsränder (2; 3) versehenen Blechstreifens (1), der als Bewehrungselement für Beton verwendet wird, aus einem Blech, dadurch gekennzeichnet, daß das Blech (11) einer Mehrfachstreifenschere (13) zugeführt wird, in der es über kammartig gegeneinander stehende Rollenscherenmesser (31; 32) mit Einkerbungen (33) auf ihrem Umfang, die mit den sickenartigen Vertiefungen (4) in dem Blechstreifen (1) übereinstimmen, in endlose Blechbänder (14) mit der Faserbreite (b) des Blechstreifens (1) und den sickenartigen Vertiefungen (4) gespalten wird, und die Blechbänder (14) einer nachgeordneten Messerschere (15) zugeführt werden, in der sie in die Blechstreifen (1) mit der Faserlänge (1) des Blechstreifens (1) zerschnitten werden.

2.      Vorrichtung zur Durchführung des Verfahrens nach Anspruch 1, dadurch gekennzeichnet, daß die Mehrfachstreifenschere (13) mit einem auf eine Oberwalze (21) und eine Unterwalze (22) verteilten Satz der kammartig gegeneinander stehenden Rollenscherenmesser (31; 32) bestückt ist, von denen jedes auf seinem Umfang mit den Einkerbungen (33) versehen ist.

3

3. Vorrichtung nach Anspruch 2, dadurch gekennzeichnet, daß zwischen je zwei Rollenscherenmessern (31; 32) derselben Walze (21; 22) gummierte Auswerferringe (23) vorgesehen sind, von denen jeder einem der Rollenscherenmesser (32; 31) der anderen Walze (22; 21) gegenüber angeordnet ist.

## Claims

1. A method of producing a metal strip (1) formed with corrugation-like recesses (4) on at least one of its longitudinal edges (2; 3) and used as a reinforcing element for concrete, made from sheet metal, characterised in that the sheet metal (11) is supplied to a multiple cutting machine (13) in which rotary cutters (31; 32) disposed in a comb arrangement relative to one another and with notches (33) on their periphery coinciding with the corrugation-like recesses (4) in the metal strips (1) cut the strips into endless metal ribbons (14) having the same width (b) as the metal strip (1) and the corrugation-like recesses (4), and the metal ribbons (14) are supplied to a downstream cutter (15) in which they are cut into the metal strips (1) having the same length (1) as the metal strip (1).

2. A device for working the method according to claim 1, characterised in that the multiple cutting machine (13) is equipped with a set of the roller cutters (31; 32) disposed relative to one another in a comb arrangement and distributed between a top roller (21) and a bottom roller (22), each roller cutter being formed with the notches (33) on its periphery.

3. A device according to claim 2, characterised in that rubber-coated ejector rings (23) are provided between each pair of roller cutters (31; 32) on the same roller (21; 22), each ring being disposed opposite one of the roller cutters (32; 31) on the other roller (22; 21).

## Revendications

1. Procédé de fabrication d'un ruban de tôle (1) à partir d'une tôle, muni de cavités (4) en forme de moulures sur l'un de ses bords longitudinaux (2; 3), au moins, et servant d'élément d'armature pour béton, caractérisé en ce que la tôle (11) est dirigée dans une cisaille multiple (13), dans laquelle elle est divisée en bandes de tôle sans fin (14), de la largeur de fibre (b) du ruban de tôle (1), et munies des cavités (4) en forme de moulures, par l'intermédiaire de couteaux à molettes (31; 32), situés en vis-à-vis à la manière de peignes et dotés d'entailles (33) sur leur pourtour, qui coïncident avec les cavités (4) en forme de moulures du ruban de tôle (1), les bandes de tôle (14) étant dirigées dans une cisaille à couteaux aval (15), dans laquelle elles sont découpées en rubans (1) de la largeur de fibre (1) du ruban de tôle (1).

2. Dispositif pour la réalisation du procédé suivant la revendication 1, caractérisé en ce que la cisaille multiple (13) est équipée d'un jeu de couteaux à molettes (31; 32), situés en vis-à-vis à la manière de peignes, répartis sur un cylindre supérieur (21) et sur un cylindre inférieur (22), et dont chacun est muni d'entailles (33) sur son pourtour.

3. Dispositif suivant la revendication 2, caractérisé en ce que des bagues d'éjection (23) caoutchoutées sont respectivement prévues entre deux couteaux à molettes (31; 32) du même cylindre (21; 22), chacune de ces bagues étant disposée en vis-à-vis d'un couteau à molettes (32; 31) de l'autre cylindre (22; 21).

Fig. 5

Fig. 4

Fig. 3

Fig. 2

Fig. 1

Fig. 6